# EUROPÄISCHE PATENTSCHRIFT

(11) **EP 3 900 982 B1**
(45) Veröffentlichungstag und Bekanntmachung des Hinweises auf die Patenterteilung: **17.01.2024**
(21) Anmeldenummer: 21169343.7
(22) Anmeldetag: 20.04.2021
(51) Int. Cl.: B60R 3/02, B61D 23/02

(54) **ZUSTIEGSSYSTEM MIT BEGEHBARER DICHTKLAPPE**
ACCESS SYSTEM WITH ACCESSIBLE SEALING FLAP
SYSTÈME D'ENTRÉE POURVU DE RABAT D'ÉTANCHÉITÉ ACCESSIBLE

(30) Priorität: 22.04.2020 DE 202020102238 U
(43) Veröffentlichungstag der Anmeldung: 27.10.2021
(73) Patentinhaber: Bode - Die Tür GmbH, 34123 Kassel (DE)
(72) Erfinder: Theis, Christoph, 34537 Bad Wildungen (DE); Rasekhi, Abbas, 34128 Kassel (DE)
(74) Vertreter: Patentanwälte Bauer Vorberg Kayser

(56) Entgegenhaltungen:
- DE-A1- 10 151 931
- DE-A1-102013 017 573
- JP-U- H0 636 927
- US-A- 1 621 479
- US-A- 2 146 668
- US-A- 2 522 674
- US-B1- 6 213 486

## Beschreibung

Die Erfindung betrifft ein Zustiegssystem für ein Fahrzeug mit den Merkmalen des Oberbegriffs der Anspruchs 1.

Bisher erfolgt die Abdichtung im vorderen Bereich von Schiebetritten üblicherweise mit Dichtgummis an Vorderkanten des Schiebtritts (auch Ausschub oder Tritt), welche mit einer Lippe versehen sind. Bei geschlossenem Zustand des Schiebetritts ist die Vorderkante des Schiebetritts mit dem Dichtprofil bündig zur Fahrzeugaußenhaut. Die Dichtlippe liegt an der Fahrzeugaußenhaut an und dichtet ab. Durch das Anliegen der Dichtung an der Fahrzeugaußenhaut ist der Einfahrweg des Schiebetritts begrenzt.

Es kann vorkommen, dass sich unterhalb des Schiebetritts im Innenbereich eine begehbare Trittfläche befindet. Diese soll bei voll eingefahrenem Tritt begehbar sein.

Aus der US 6 213 486 B1 ist ein Zustiegssystem für ein Wohnmobile oder Wohnwagen mit zumindest einer schwenkbaren Dichtklappe bekannt, die von einer begehbaren ersten Position in eine nicht begehbare zweite Position schwenkbar is. In der nicht begehbaren zweiten Position schließt die Dichtklappe bündig mit einer Fahrzeugaußenseite ab. Das Zustiegssystem bildet im ausgeklappten Zustand zwei Treppenstufen aus. Der Aufbau und insbesondere das Antriebsystem für die Stufen ist verhältnismäßig aufwändig und fehleranfällig konstruiert.

Die Aufgabe der Erfindung besteht darin, ein verbessertes Zustiegssystem zu schaffen, bei dem unterhalb des Schiebetritts im Innenbereich eine begehbare Trittfläche vorgesehen ist. Die Tür bzw. die Fahrzeugaußenhaut soll trotzdem im geschlossenen Zustand abgedichtet sein.

Die Aufgabe wird erfindungsgemäß durch ein Zustiegssystem mit den Merkmalen des Patentanspruchs 1 gelöst.

Demnach weist das Zustiegssystem zumindest eine schwenkbare Dichtklappe auf, die von einer begehbaren ersten Position in eine nicht begehbare zweite Position schwenkbar ist, wobei die Dichtklappe in der nicht begehbaren zweiten Position bündig mit der Fahrzeugaußenseite abschließt.

Da bei voll eingefahrenem Tritt die innenliegende, fahrzeugseitige Stufe unterhalb des Tritts begehbar sein soll, durchdringt der Schiebetritt des Tritts beim Einfahren, die dichtende Ebene der Fahrzeugaußenhaut und gibt die darunterliegende Trittfläche bzw. den Fahrzeugboden frei, sodass dieser Bereich als Stufe genutzt werden kann.

Dies wird erfindungsgemäß realisiert, indem unterhalb des Schiebetritts eine Dichtklappe positioniert ist. Diese schließt also in einer Grundstellung bzw. der zweiten Position des Zustiegssystems bei geschlossener Lage bündig mit der Fahrzeugaußenhaut ab. Die Abdichtung zwischen Schiebetritt und Dichtklappe erfolgt dabei ähnlich wie beim bisherigen Stand der Technik. Die Türöffnung des Fahrzeugs ist in der zweiten Position bzw. Grundstellung also durch einen oder zwei Türflügel, eine Frontseite des Schiebetritts und die sich im Wesentlichen vertikal ausgerichtete Dichtklappe geschlossen.

Die Dichtklappe nimmt somit in ihrer Grundstellung eine im Wesentlichen aufrechte, sich vertikal erstreckende Ausrichtung ein, während sie bei eingefahrenem Schiebetritt in der ersten Position in Richtung des Fahrzeuginneren umgeklappt, im Wesentlichen horizontal erstreckend am Fahrzeugboden liegend angeordnet ist. In der umgeklappten ersten Position ist die Dichtklappe begehbar und dient als Trittfläche bzw. einem begehbaren Bereich der Trittstufe. Dadurch wird erreicht, dass Höhenunterschiede zum Bahnsteig überwunden werden können. Das Zustiegssystem weist dann zumindest zwei Treppenstufen auf, die es Benutzern des Fahrzeugs erleichtert, in das Fahrzeug ein- oder auszusteigen.

Wenn der Schiebetritt voll einfährt, um die darunterliegende Stufe freizugeben, schwenkt die Dichtklappe also ins Fahrzeuginnere hinein bis sie horizontal aufliegt. Dadurch wird die Dichtklappe zum begehbaren Teil der Trittstufe.

Die Steuerung der Schwenkbewegung der Dichtklappe erfolgt durch den Schiebetritt bzw. dessen Antrieb. Diese Steuerung wird erfindungsgemäß mithilfe von Betätigungshebeln realisiert, welche mit Laufrollen versehen sind und in Schiebetrittführungsbahnen geführt werden. Die Betätigungshebel verbinden den Schiebetritt mit der Dichtklappe, sodass die Bewegung des Schiebetritte auf die Dichtklappe übertragen wird. Die Anlenkung der Betätigungshebel an der Dichtklappe kann dabei über Schwenkgelenke erfolgen, vorzugsweise aber ebenfalls über eine Führungsbahn. Der kinematische Aufbau erlaubt dabei sowohl ein Absenken bzw. Umschwenken der Dichtklappe, als auch ein Aufrichten zurück in die Grundstellung.

In einer ersten Ausführungsvariante kann es ausreichend sein, nur einen einzigen Betätigungshebel für die Bewegung der Dichtklappe vorzusehen, in einer zweiten Ausführungsvariante sind zwei Betätigungshebel vorgesehen, die jeweils seitlich der Dichtklappe und seitlich des Schiebetritts angeordnet sind und somit keine Stolperfallen darstellen.

In einer weiteren Stellung ist der Schiebetritt aus dem Fahrzeug herausgefahren angeordnet, um beispielsweise einen Spalt zu einem Bahnsteig zu überbrücken. In diesem Fall verbleibt die Dichtklappe ebenfalls in ihrer Grundstellung, also im Wesentlichen vertikal ausgerichtet, der Türöffnungsbereich unterhalb des Schiebetritts bleibt durch die Dichtklappe verschlossen. Die sich unterhalb des Schiebetritts befindliche Trittstufe ist nicht begehbar, da Fahrgäste auf den sich darüber befindlichen Schiebetritt treten.

Die beigefügten Figuren zeigen eine bevorzugte Ausführungsvariante. Die gezeigten einzelnen technischen Bauteile und Elemente müssen für eine erfindungsgemäße Ausführung nicht zwangsweise alle gemeinsam realisiert werden. Es ist durchaus möglich, einzelne Bauteile und Elemente wegzulassen oder durch andere geeignete Bauteile und Elemente zu ersetzen.

Es zeigen:
Figur 1: ein erfindungsgemäßes Zustiegssystem mit geschlossener Dichtklappe,
Figur 2: das Zustiegssystem aus Figur 1 in Seitenansicht,
Figur 3: das Zustiegssystem mit geöffneter Lage der Dichtklappe,
Figur 4: das Zustiegssystem gemäß Figur 3 in perspektivischer Seitenansicht,
Figur 5: das Zustiegssystem gemäß der Figuren 3 und 4 in Seitenansicht,
Figur 6: das Zustiegssystem mit voll ausgefahrenem Schiebetritt.

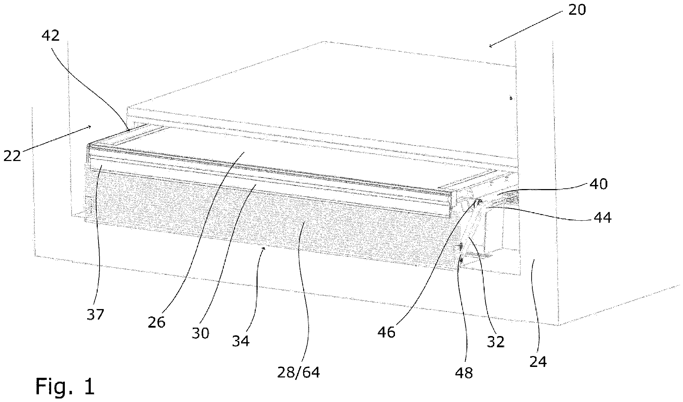

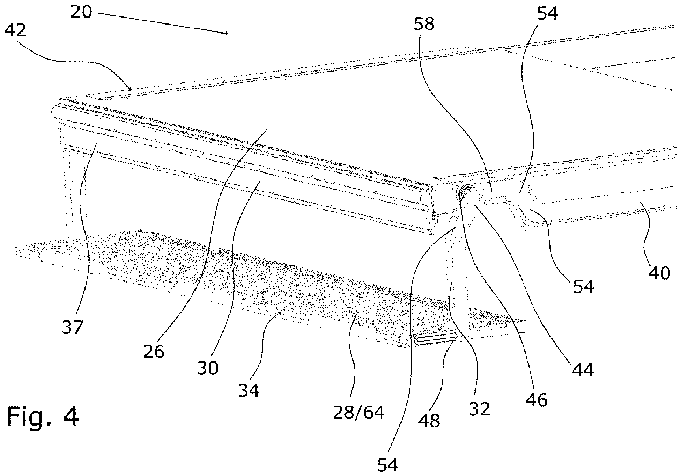

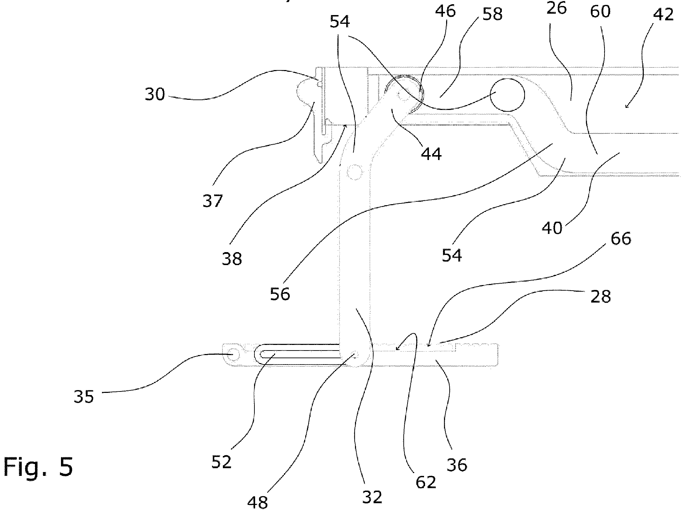

Die nachfolgenden Figuren 1 bis 6 zeigen eine bevorzugte Ausführungsvariante eines erfindungsgemäßen Zustiegssystems 20 für ein Fahrzeug. Das Zustiegssystem 20 ermöglicht einen Zustieg in ein nicht gezeigtes Fahrzeug, vorzugsweise ein Schienenfahrzeug oder einen Bus und ist in einer Türöffnung 22 eines Türportals 24 im unteren, begehbaren Bereich angeordnet. Die Türöffnung 22 wird durch eine ebenfalls nicht gezeigte Tür oder einen Türflügel verschlossen und geöffnet.

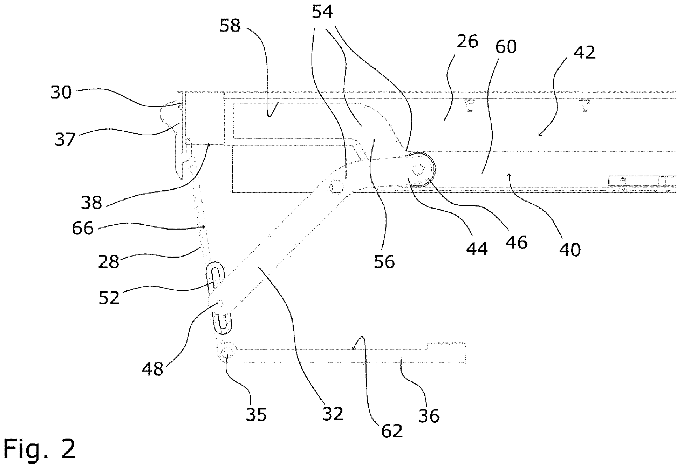

Zur Erleichterung des Einstiegs und/oder zur Überbrückung eines Spaltes, beispielsweise zu einem Bahnsteig, ist ein ausfahrbarer Schiebetritt 26 vorgesehen. Die nicht gezeigte Tür verschließt den Bereich der Türöffnung 22 oberhalb des Schiebetritts 26. Unterhalb des Schiebetritts 26 ist eine Dichtklappe 28 angeordnet, die den Bereich der Türöffnung 22 verschließt, der sich unterhalb des Schiebetritts 26 befindet. In geschlossener Position der Tür und bei eingefahrenem Schiebetritt 26 in eine Grundstellung bzw. in eine zweite Position ist die Türöffnung 22 somit im Wesentlichen durch die Tür, einer Frontseite 30 des Schiebetritts 26 und die Dichtklappe 28 verschlossen. Dies geht insbesondere aus den Figuren 1 und 2 hervor.

In Figur 1 sind die Türöffnung 22 und das Türportal 24 breiter als der Schiebetritt 26 dargestellt. Der sich ergebende Spalt wird mit einem nicht gezeigten Abdichtrahmen geschlossen. Alternativ kann die Dichtklappe 28 etwa die gleiche Breite wie der Schiebetritt 26 aufweisen.

Figur 2 verdeutlicht die wesentlichen Komponenten des erfindungsgemäßen Zustiegssystems 20 in einer Seitenansicht. Das Türportal 24, und auch die Tür sind nicht dargestellt. Das Zustiegssystem 20 befindet sich in der Grundstellung, in der die Türöffnung 22 verschlossen und das Fahrzeug fahrbereit ist. Erkennbar ist insbesondere, dass die Dichtklappe 28 über einen Betätigungshebel 32 mit dem Schiebetritt 26 verbunden ist. Die Dichtklappe 28 ist mit ihrer einem Fahrzeuguntergrund zugewandten Bodenseite 34 über ein Gelenk 35 schwenkbar an einen Fahrzeugboden 36 angelenkt. Dadurch ist die Dichtklappe 28 über ihre sich im Wesentlichen über die Breite der Türöffnung 22 erstreckende Bodenseite 34 sowohl ins Fahrzeuginnere als auch aus dem Fahrzeug heraus schwenkbar.

Figur 2 verdeutlicht weiterhin, dass die Frontseite 30 des Schiebetritts 26 an einer Schiebetrittunterseite 38 in der Grundstellung über eine Dichtung 37 gegen die Dichtklappe 28 abdichtet.

Der gezeigte Betätigungshebel 32 ist in einer Schiebetrittführungsbahn 40 verfahrbar geführt. Die Schiebetrittführungsbahn 40 verläuft in Ausschubrichtung des Schiebetritts 26 entlang einer Schiebetrittaußenseite 42, sie ist vorzugsweise in diese als Nut eingelassen. An seinem freien Schiebetrittende 44 weist der Betätigungshebel 32 eine Führungsrolle 46 auf, über die das Schiebetrittende 44 und damit der Betätigungshebel 32 in der Schiebetrittführungsbahn 40 verfahrbar ist.

Mit seinem gegenüberliegenden freien Dichtklappenende 48 ist der Betätigungshebel 32 mit der Dichtklappe 28 verbunden. Auch das Dichtklappenende 48 ist über einen gewissen Streckenabschnitt entlang der Dichtklappe 28 verfahrbar. Zu diesem Zweck weist auf die Dichtklappe 28 eine Dichtplattenführungsbahn 52 auf, in der das Dichtklappenende 48 des Betätigungshebels 32 geführt ist, vorzugsweise ebenfalls über eine nicht gezeigte Führungsrolle.

Sowohl die Schiebetrittführungsbahn 40 als auch der Betätigungshebel 32 sind über ihren Verlauf nicht gerade, sondern weisen Bögen 54 auf. Der Betätigungshebel 32 ist über seinen Bogen 54 in Richtung des Fahrzeuginnern aus seiner Geraden abgeknickt ausgeführt. Die Schiebetrittführungsbahn 40 weist zwei gegensinnig gebogene Bögen 54 auf, sodass sich über den Verlauf der Schiebetrittführungsbahn 40 eine Art S-förmiger Bereich 56 ergibt. Die Schiebetrittführungsbahn 40 weist also ausgehend von der Frontseite 30 des Schiebetritts 26 einen ersten geraden Streckenabschnitt 58 auf, der in den S-förmigen Bereich 56 übergeht. Der S-förmige Bereich 56 geht dann im weiteren Verlauf in einen zweiten geraden Streckenabschnitt 60 über.

Der Fahrzeugboden 36 weist eine Vertiefung 62 auf, dessen Tiefe etwa der Stärke oder Dicke der Dichtklappe 28 entspricht, sodass diese in die Vertiefung 62 eingeschwenkt werden kann. Somit kann die Dichtklappe 28 mit ihrer begehbaren Lauffläche 64 bündig mit dem Fahrzeugboden 36 abschließen und bildet im gezeigten Ausführungsbeispiel zusammen mit umliegenden Bereichen des Fahrzeugbodens 36 eine Trittfläche für Fahrgäste aus.

Die Dichtklappenführungsbahn 52 ist im gezeigten Ausführungsbeispiel an einer sich in der Grundstellung vertikal erstreckenden Seitenkante 66 der Dichtklappe 28 angeordnet und kann mitsamt dem Dichtklappenende 48 des Betätigungshebels 32 ebenfalls in die Vertiefung 62 des Fahrzeugbodens 36 verschwenkt werden.

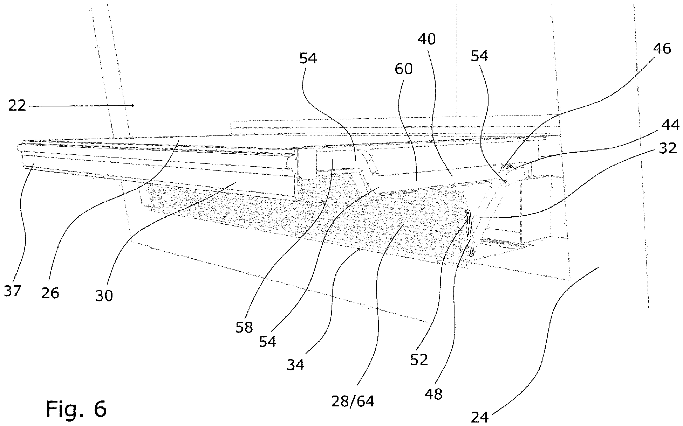

Die Figuren 1-6 verdeutlichen die wesentlichen verschiedenen Positionen des Schiebetritts 26, der Dichtklappe 28 und der damit verbundenen Komponenten. Die Figuren 1 und 2 zeigen die Grundstellung bzw. die zweite Position des Zustiegssystems 20, die Figuren 2 bis 5 eine begehbare Stellung oder erste Position der Dichtklappe 28 mit teilweise zurückgezogenem Schiebetritt 26 und Figur 6 einen ausgefahrenen Schiebetritt 26 bei geschlossener Dichtklappe 28, der darunter befindliche Fahrzeugboden 36 ist in dieser Position nicht begehbar.

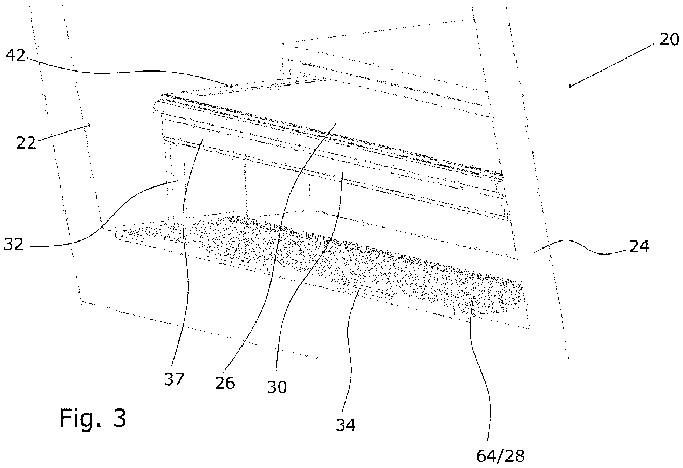

Die Dichtklappe 28 wird durch die Bewegung des Schiebetritts 26 angetrieben, sie bewegt sich in Abhängigkeit der Bewegung des Schiebetritts 26 automatisch in die vorgesehenen Positionen oder Stellungen. Beispielsweise zeigt Figur 6, dass in der Position mit ausgefahrenem Schiebetritt 26 die Türöffnung 22 unterhalb des Schiebetritts 26 durch die Dichtklappe 28 verschlossen bleibt, wohingegen die Dichtklappe 28, in der begehbaren Position oder Stellung gemäß der Figuren 3-5 ins Fahrzeuginnere verschwenkt in der Vertiefung 62 des Fahrzeugbodens 36 angeordnet ist.

### Bezugszeichenliste

- 20: Zustiegssystem
- 22: Türöffnung
- 24: Türportal
- 26: Schiebetritt
- 28: Dichtklappe
- 30: Frontseite Schiebetritt
- 32: Betätigungshebel
- 35: Gelenk
- 34: Bodenseite
- 36: Fahrzeugboden
- 37: Dichtung
- 38: Schiebetrittunterseite
- 40: Schiebetrittführungsbahn
- 42: Schiebetrittaußenseite
- 44: Schiebetrittende Betätigungshebel
- 46: Führungsrolle
- 48: Dichtklappenende Betätigungshebel
- 52: Dichtklappenführungsbahn
- 54: Bögen
- 56: S-förmiger Bereich
- 58: erster gerader Streckenabschnitt
- 60: zweiter gerader Streckenabschnitt
- 62: Vertiefung
- 64: Lauffläche

## Patentansprüche

1. Zustiegssystem (20) für ein Fahrzeug, aufweisend zumindest eine schwenkbare Dichtklappe (28), die von einer begehbaren ersten Position in eine nicht begehbare zweite Position schwenkbar ist, wobei die Dichtklappe (28) in der nicht begehbaren zweiten Position bündig mit einer Fahrzeugaußenseite abschließt, wobei
- die Dichtklappe (28) über zumindest einen Betätigungshebel (32) mit einem Schiebetritt (26) verbunden ist und eine Bewegung des Schiebtritts (26) die Bewegung der Dichtklappe (28) über den Betätigungshebei antreibt, **dadurch gekennzeichnet, dass**
- der Betätigungshebel (32) in einer Schiebetrittführungsbahn (40) und ein Dichtklappenende (48) des Betätigungshebels (32) in einer Dichtplattenführungsbahn (52) verfahrbar geführt sind.

2. Zustiegssystem (20) nach Anspruch 1, **dadurch gekennzeichnet, dass** der Betätigungshebel (32) an seinem freien Schiebetrittende (44) eine Führungsrolle (46) aufweist, die in der Schiebetrittführungsbahn (40) geführt ist.

3. Zustiegssystem (20) nach Anspruch 1 oder Anspruch 2, **dadurch gekennzeichnet, dass** die Dichtklappe (28) mit ihrer einem Fahrzeuguntergrund zugewandten Bodenseite (34) derart schwenkbar an einen Fahrzeugboden (36) angelenkt ist, dass sie sowohl ins Fahrzeuginnere als auch aus dem Fahrzeug heraus schwenkbar ist.

4. Zustiegssystem (20) nach einem der Ansprüche 1 bis 3, **dadurch gekennzeichnet, dass** die Schiebetrittführungsbahn (40) und der Betätigungshebel (32) über ihren Verlauf Bögen (54) aufweisen.

5. Zustiegssystem (20) nach Anspruch 4, **dadurch gekennzeichnet, dass** der Betätigungshebel (32) über den Bogen (54) in der zweiten Position in Richtung des Fahrzeuginnern aus seiner Geraden abgeknickt ausgeführt ist.

6. Zustiegssystem (20) nach Anspruch 4 oder Anspruch 5, **dadurch gekennzeichnet, dass** die Schiebetrittführungsbahn (40) zwei gegensinnig gebogene Bögen (54) aufweist, sodass sich über den Verlauf der Schiebetrittführungsbahn (40) S-förmiger Bereich (56) ergibt.

## Claims

1. A boarding system (20) for vehicle, comprising at least one pivotable sealing flap (28), which can be pivoted from an accessible first position into a non-accessible second position, wherein the sealing flap (28) terminates flush with an outside of the vehicle in the non-accessible second position,
wherein
- the sealing flap (28) is connected to a sliding step (26) via at least one actuating lever (32) and a movement of the sliding step (26) drives the movement of the sealing flap (28) via the actuating lever, **characterised in that**
- the actuating lever (32) is movably guided in a sliding step guide track (40) and a sealing flap end (48) of the actuating lever (32) in a sealing plate guide track (52).

2. The boarding system (20) according to claim 1, **characterised in that** the actuating lever (32) comprises a guide roller (46) at its free sliding step end (44), which is guided in the sliding step guide track (40).

3. The boarding system (20) according to claim 1 or claim 2, **characterised in that** the sealing flap (28) is pivotably connected to the vehicle floor (36) with its bottom side (34) facing a vehicle base, in such a way that it can be pivoted both into the vehicle interior and out of the vehicle.

4. The boarding system (20) according to any one of claims 1 to 3, **characterised in that** the sliding step guide track (40) and the actuating lever (32) have arcs (54) along the course.

5. The boarding system (20) according to claim 4, **characterised in that** the actuating lever (32) is designed kinked out of its straight line via the arc (54) in the direction of the vehicle interior in the second position.

6. The boarding system (20) according to claim 4 or claim 5, **characterised in that** the sliding step guide track (40) comprises two arcs (54) curved in opposite directions, so that an S-shaped area (56) results over the course of the sliding step guide track (40).

## Revendications

1. Système d'accès (20) pour un véhicule, comportant au moins un clapet d'étanchéité (28) pivotant, qui est susceptible de pivoter d'une première position praticable dans une deuxième position non praticable, dans la deuxième position non praticable, le clapet d'étanchéité (28) se terminant à fleur d'une face extérieure du véhicule,
- le clapet d'étanchéité (28) étant relié par l'intermédiaire d'au moins un levier d'actionnement (32) avec une marche coulissante (26) et un déplacement de la marche coulissante (26) entraînant le déplacement du clapet d'étanchéité (28) par l'intermédiaire du levier d'actionnement, **caractérisé en ce que**
- le levier d'actionnement (32) est guidé en étant déplaçable dans une trajectoire de guidage (40) de la marche coulissante et une extrémité (48) du clapet d'étanchéité du levier d'actionnement (32) est guidée en étant déplaçable dans une trajectoire de guidage (52) de la plaque clapet d'étanchéité.

2. Système d'accès (20) selon la revendication 1, **caractérisé en ce que** sur son extrémité (44) de marche coulissante libre, le levier d'actionnement (32) comporte un galet de guidage (46) qui est guidé dans la trajectoire de guidage (40) de la marche coulissante.

3. Système d'accès (20) selon la revendication 1 ou la revendication 2, **caractérisé en ce que** par sa face de fond (34) qui est dirigée vers un sol de véhicule, le clapet d'étanchéité (28) est articulé de manière pivotante sur un sol (36) de véhicule, de sorte à être pivotant aussi bien vers l'intérieur du véhicule, que hors du véhicule, vers l'extérieur.

4. Système d'accès (20) selon l'une quelconque des revendications 1 à 3, **caractérisé en ce que** sur leur trajet, la trajectoire de guidage (40) de la marche coulissante et le levier d'actionnement (32) comportent des coudes (54).

5. Système d'accès (20) selon la revendication 4, **caractérisé en ce que** le levier d'actionnement (32) est infléchi par l'intermédiaire du coude (54), à partir de sa droite dans la deuxième position, en direction de l'intérieur du véhicule.

6. Système d'accès (20) selon la revendication 4 ou la revendication 5, **caractérisé en ce que** la trajectoire de guidage (40) de la marche coulissante comporte deux coudes (54) infléchis à contre-sens, de telle sorte que le trajet de la trajectoire de guidage (40) de la marche coulissante donne lieu à une zone en forme de S (56).
